# EUROPÄISCHE PATENTSCHRIFT

(11) **EP 2 358 504 B1**
(45) Veröffentlichungstag und Bekanntmachung des Hinweises auf die Patenterteilung: **07.11.2012**
(21) Anmeldenummer: 09807490.9
(22) Anmeldetag: 16.12.2009
(51) Int. Cl.: B25J 17/02

(54) **DELTAROBOTER MIT BESONDERER ANORDNUNG DER KUGELGELENKE**
DELTA ROBOT HAVING SPECIAL ARRANGEMENT OF THE BALL JOINTS
ROBOT DELTA PRÉSENTANT UN AGENCEMENT PARTICULIER DES JOINTS SPHÉRIQUES

(30) Priorität: 19.12.2008 DE 102008063869
(43) Veröffentlichungstag der Anmeldung: 24.08.2011
(73) Patentinhaber: Elau GmbH, 97828 Marktheidenfeld (DE)
(72) Erfinder: HOMBACH, Christian, 97261 Güntersleben (DE); BÖTTCHER, Felix, 97204 Höchberg (DE)
(74) Vertreter: Pöhner, Wilfried Anton
(86) Internationale Anmeldenummer: PCT/DE2009/001772
(87) Internationale Veröffentlichungsnummer: WO 2010/069298

(56) Entgegenhaltungen:
- EP-A1- 2 116 339
- US-A- 5 333 514
- US-B1- 6 419 211

## Beschreibung

Die Erfindung bezieht sich auf einen Deltaroboter, bestehend aus einer ortsfesten Grundplatte und wenigstens drei darauf befestigten Antrieben, die mit wenigstens je einem Arm verbunden sind, von denen wenigstens einer an seinem anderen Ende über je ein Kugelgelenk mit jeweils zwei Stangen verbunden ist, die parallel zueinander verlaufen und die an ihrem anderen Ende jeweils über ein weiteres Kugelgelenk mit einer bewegbaren Parallelplatte verbunden sind, wobei jedes Kugelgelenk aus je einem Kugelsegmentkopf und einem dazu komplementären Hohlkugelsegment besteht und die beiden an parallelen Stangen jeweils benachbarten Kugelgelenke spiegelsymmetrisch zueinander ausgerichtet sind und jedes Hohlkugelsegment auf den zugehörigen Kugelsegmentkopf aufgedrückt wird, indem wenigstens ein dauerhaft elastisches Element zwischen zwei zueinander parallelen Stangen gespannt ist und wobei der Mittelpunkt wenigstens eines Kugelsegmentkopfes gegenüber der Längstrageachse der mit dem Kugelgelenk verbundenen Stange verschoben angeordnet ist und die Richtung der Verschiebung zentral vom Hohlkugelsegment hinweg weist und der Betrag der Verschiebung kleiner als der Radius des Kugelsegmentkopfes ist. Ein solcher Deltaroboter ist aus der US-B-6 419 211 bekannt.

Auf aktuellem Stand der Technik haben sich Deltaroboter insbesondere für die Verpackung von leichtgewichtigen Nahrungsmitteln bewährt, da sie im Verhältnis zu ihren Kosten eine extrem hohe Dynamik von bis zu drei Verpackungsvorgängen pro Sekunde ermöglichen.

Die ersten Deltaroboter wiesen drei Arme auf. Es sind jedoch auch Varianten mit vier und mehr Armen bekannt.

Die meisten Deltaroboter bestehen auf aktuellem Stand der Technik aus einer Grundplatte, auf der drei Servoantriebe montiert sind. An deren Abtriebswelle ist ein Arm - auch Oberarm genannt - befestigt, an dem als "Unterarm" jeweils zwei parallele Stangen angelenkt sind, die wiederum gelenkig mit der Parallelplatte verbunden sind. Durch Verschwenken der Servoantriebe kann die Parallelplatte in jede be liebige Position des vorgesehenen Arbeitsraumes manövriert werden. Weil die Unterarme aus zwei parallelen Stangen bestehen, bewegt sich die Parallelplatte so - wie ihr Name sagt - stets parallel zur Grundplatte.

Prinzipiell ist für die gelenkige Verbindung der Stangen zu den Armen und zur Parallelplatte ein Kreuz- oder Kardangelenk verwendbar. Die damit maximal erreichbaren Verschwenkungswinkel sind jedoch im Vergleich zu einem Kugelgelenk, bestehend aus einem Kugelsegmentkopf und einem darauf gleitenden, komplementären Hohlkugelsegment spürbar kleiner. Weil Kugelgelenke also einen größeren Verschwenkungswinkel und damit einen größeren Arbeitsraum ermöglichen, sind sie heute die für Deltaroboter am meisten genutzte Gelenkausführung.

Auf aktuellem Stand der Technik nennt die US 5,333,514, Osamu Toyama, einen Deltaroboter, dessen Unterarme aus parallelen Stangenpaaren bestehen, an deren Enden Hohlkugelsegmente - auch als Kugelpfanne oder Kugelkalotte zu bezeichnen - angeordnet sind und auf die Kugelsegmentköpfe am Arm oder an der Parallelplatte aufgedrückt werden, indem die Enden der beiden parallelen, stabförmigen Unterarme durch Zugfedern zusammengehalten werden. Das Hohlkugelsegment bewegt sich dann auf dem Kugelkopf wie ein Gleitlager. Ein wesentlicher Vorteil dieses Lagers ist, dass sich in jedem Winkel eine gleichartige Auflagefläche ergibt.

Die verschiedenen Darstellungen der Stangen in der US 5,333,514 zeigen aus allen Blickrichtungen die gleiche Breite, woraus folgt, dass die Stangen einen runden Querschnitt haben. In der Figur 5 der Patentschrift ist erkennbar, dass die Stangen ein dünnwandiges Rohr sind.

Dort wird auch gezeigt, dass die Öffnungsflächen der Hohlkugelsegmente der Kugelgelenke in Verlängerung der Mittelachse ausgerichtet sind.

Aus dieser - für den Stand der Technik typischen - Anordnung ergibt sich jedoch der wesentliche Nachteil, dass die Stangen unsymmetrisch belastet werden, und daher leicht knicken können, wie im Folgenden erläutert wird: Bei einem Rohr ist die Mittelachse auch die Längstrageachse. Wenn eine Kraft in Richtung dieser Längstrageachse einwirkt, dann wird das Rohr exakt symmetrisch belastet und die Kräfte verteilen sich auf alle Bereiche der Rohrwandung und das Maximum der Tragfähigkeit des Rohres wird erreicht.

Sobald die Belastung jedoch aus der Längstrageachse heraus wandert, wird ein Teil der Rohrwandung stärker belastet als die übrigen Teile und knickt ein, obwohl die maximale Tragfähigkeit des Rohres noch nicht erreicht ist.

Da bei einem Kugelgelenk die Kräfte über die Auflagefläche hinweg verteilt werden, werden bei der vorgenannten Anordnung Druckkräfte, die über einen Kugelkopf und das zugehörige Hohlkugelsegment in eine Stange eingeleitet werden, nachteiliger Weise nicht in die Längstrageachse weitergeleitet, sondern außerhalb davon. Deshalb wird das Rohr auf derjenigen Seite, an der das Hohlkugelsegment angeordnet ist, bereits bei Druckbelastungen einknicken, die unterhalb der maximalen Tragfähigkeit des Rohres liegen.

Um diesen Effekt zu kompensieren, kann aus der US 6,419,211 und dort aus der Figur 1 die Idee entnommen werden, den Abstand der beiden Rohre zueinander etwas größer zu dimensionieren, als es der Abstand der Kugelköpfe zueinander nahe legt. Dadurch verläuft die Trageachse des Rohres nicht mehr durch den geometrischen und rotatorischen Mittelpunkt von Kugelkopf und Hohlkugelsegment sondern weiter "außen" und damit durch den die Kräfte des Rohres aufnehmenden Teil des Hohlkugelsegmentes.

Bei praktischen Anwendungen von Deltarobotern nach diesem Prinzip zeigen auch sehr dünnwandige Rohre eine höhere Belastbarkeit und längere Lebensdauer.

Ein wesentlicher Nachteil der US 6,419,211 ist jedoch, dass die Federn oder andere dauerhaft elastischen Elemente, die die Hohlkugelsegmente auf den Kugelkopfsegmenten halten, in der Mitte einer runden oder rohrförmigen Stange angelenkt sind. Da bei der Anordnung der runden Stäbe gemäß US 6,419,211 deren Mittelachse nicht mehr durch die Mittelpunkte der Kugelkopfsegmente verläuft, sondern außerhalb dieser Linie angeordnet ist, liegen damit auch die Verschwenkachsen der Federn nicht mehr auf einer Linie durch die rotatorischen Mittelpunkte der Kugelkopfsegmente.

Das hat zur Folge, dass sich beim Verschwenken der Stangen laufend der Abstand zwischen den Anlenkungspunkten der Federn ändert, so dass sich die Federn fortwährend ausdehnen und zusammen ziehen, was bei der hohen Anzahl der Lastwechsel eines Deltaroboters zu einem frühzeitigen Abriss der Federhälse führt.

Auf diesem Hintergrund hat sich die Erfindung die Aufgabe gestellt, bei einem Deltaroboter die Verbindung zwischen einem Kugelgelenk und einer Stange der Unterarme so anzuordnen, dass sich Zug- oder Druckkräfte ohne zusätzliche Biegemomente gleichmäßig auf die Stange verteilen und dass dabei die Federn oder anderen elastischen Elemente zum Zusammenhalten von parallel angeordneten Stangen eine möglichst hohe Lebensdauer erreichen.

Als Lösung präsentiert die Erfindung einem Deltaroboter gemäß Anspruch 1, bei dem die Verschwenkachsen der dauerhaft elastischen Elemente außerhalb der Längstrageachse angeordnet sind und auf einer geraden Verbindungslinie zwischen den rotatorischen Mitten der beiden Kugelgelenke an den beiden Enden der jeweiligen Stange angeordnet sind und jeweils den gleichen Abstand zu den Ihnen benachbarten Kugelsegmentköpfen haben.

Das entscheidende Verdienst der Erfindung ist also, erkannt zu haben, dass die Geometrie der Anordnung gemäß US 6,419,211 mit gegenüber dem Kugelsegmentkopf etwas auseinander gerückten Stangen, sich die mittig auf den Stangen angelenkten Federn bei jeder Bewegung der Stangen gegenüber dem Kugelkopf etwas ausdehnen und wieder zusammenziehen. Die für einen Delta-Roboter typische hohe Anzahl dieser Lastspiele führt dann alsbald zu einem verfrühten Ermüdungsbruch, vorrangig am Hals der Feder.

Dieses Problem löst die Erfindung dadurch, dass sie beim "Auseinanderrücken" der beiden rohrförmigen Stangen des Unterarmes die Verschwenkachsen zur Befestigung der elastischen Elemente nicht mitwandern lässt, sondern deren ursprünglichen Abstand beibehält. Dazu muss die Verschwenkachse auf dem Rohr um soviel wieder "zurück gerückt" werden, wie die Stange nach außen gewandert ist, so dass der Abstand der Verschwenkachsen zueinander dem Abstand der rotatorischen Mitten der Ihnen benachbarten Kugelsegmentköpfe gleicht.

Wenn die beiden Verschwenkachsen jeweils den gleichen Abstand zu den Ihnen benachbarten Kugelsegmentköpfen haben, bilden sie - wegen der stets parallel zueinander verlaufenden beiden Stangen - mit den Mitten der benachbarten Kugelsegmentköpfe ein Parallelogramm und zwar unabhängig von der Stellung der Stangen. Dadurch wird erreicht, dass das elastische Element unabhängig von der Winkelstellung der beiden Stangen stets seine Länge beibehält, was seine Lebensdauer erhöht.

Ein weiteres, für sich alleine bereits bekanntes, wesentliches Merkmal der Erfindung soll an dem Anwendungsbeispiel einer Stange in Form eines Rohres verdeutlicht werden, weil das eine sehr häufig für Deltaroboter verwendete Konfiguration ist, die zudem vergleichsweise einfach erläutert werden kann. Es ist einfach nachvollziehbar, dass die Längstrageachse bei einem Rohr die Mittelachse ist, denn bei einer Belastung eines Rohres mit einer Kraft exakt in Richtung der Mittelachse verteilen sich die Kräfte gleichmäßig in der Wand des Rohres.

Deshalb ist es eine weitere Aufgabe der Erfindung, dafür zu sorgen, dass die Zug- oder Druckkraft, die von dem Kugelgelenk auf die Stange ausgeübt wird, auch in Richtung der Längstrageachse eingeleitet wird.

Zur Weiterleitung der Kraft vom Kugelsegmentkopf auf die Stange wird ein Hohlkugelsegment genutzt. Bei genauer Betrachtung der Kraftverteilung wird deutlich, dass die Kraft in einem Kugelgelenk auf dessen Fläche verteilt wird. Deshalb liegt der resultierende Kraftvektor aller vom Hohlkugelsegment in Längsrichtung der Stange wirkenden Kräfte nicht am Rand sondern im Inneren des Hohlkugelsegmentes.

Deshalb verschiebt die Erfindung das Hohlkugelsegment gegenüber der tragenden Längsachse der Stange soweit, dass die resultierende Kraft des Hohlkugelsegmentes in die Längstrageachse gerückt wird. Dazu muss das Hohlkugelsegment gegenüber der Längsachse der Stange in eine Richtung verschoben werden, die zentral vom Hohlkugelsegment hinweg weist. Der Betrag der Verschiebung ist stets kleiner als der Radius des Kugelsegmentkopfes.

Es leuchtet ohne weiteres ein, dass eine Verschiebung um den gesamten Betrag des Radius vom Kugelsegmentkopf keine Verbesserung im Sinne der Aufgabenstellung bringt, sondern nur die Ungleichmäßigkeit der Kraftverteilung auf die gegenüberliegende Seite der Wandung des Rohres verlagert. Das Optimum liegt dazwischen, also bei einem Betrag der Verschiebung, der größer als Null und kleiner als der Radius des Kugelsegmentkopfes ist. Eine Verbesserung wird bereits dann erreicht, wenn der Betrag der Verschiebung größer als ¼ und kleiner als ¾ des Radius des Kugelsegmentkopfes ist.

Für die Berechnung des Summenvektors aller parallel zur Längstrageachse der Stange ausgerichteten Komponenten der Zug- und Druckkräfte, muss die Kurve herangezogen werden, auf der die in Richtung der Längstrageachse verlaufenden Komponenten der Zug- und Druckkräfte in Abhängigkeit von einem senkrecht zur genannten Längstrageachse verlaufenden Radius aufgetragen sind.

Relevant ist also die Kraftverteilung über denjenigen Radius der Hohlkugel, der durch den Mittelpunkt ihrer Öffnung und senkrecht zur Längsachse des Stabes verläuft, mit dem sie verbunden ist. Diese Kraftverteilung lässt sich durch eine Kraftverteilungskurve darstellen. Der Schwerpunkt der Fläche unter dieser Kraftverteilungskurve liegt auf demjenigen Punkt des Radius, an dem die Summe aller Kraftvektoren die gleiche Wirkung hätte, wie wenn ein einziger Kraftvektor in diesem Punkt angreifen würde.

Um diesen Betrag muss der Mittelpunkt des Hohlkugelsegmentes gegenüber der Längstrageachse verschoben werden, wenn er für die in Längsrichtung wirkenden Komponenten der Druck- und Zugkräfte optimiert werden soll.

Die Längstrageachse ist bei einer zylindrischen oder hohlzylindrischen Stange ihre Mittellinie, was einfach nachvollziehbar ist, weshalb die bis hier wiedergegebenen Erläuterungen auf dem einfach zu erklärenden Beispiel einer rohrförmigen Stange basieren.

Im allgemeinsten Fall kann die Stange jedoch auch eine beliebige Form annehmen, weist also über ihre Länge hinweg kein gleich bleibendes Profil auf. Ein Beispiel einer solchen Form ähnelt den Oberschenkelknochen bei Menschen und Tieren, der durch die Evolution in ein optimales Verhältnis zwischen Materialaufwand und Tragfähigkeit gebracht worden ist. Eine ähnliche Form kann z.B. aus Aluminiumschaum gefertigt und als Unterarm eines Roboters eingesetzt werden. Für diese wie für andere Formen ist die Längstrageachse die Verbindung der Flächenschwerpunkte aller Querschnitte der Stange.

Erst in einer weiteren Einschränkung weist die Stange ein über die Länge hinweg gleichmäßiges Profil auf. Dieses Profil muss jedoch nicht unbedingt ein Rohr sein, sondern kann auch jede andere beliebige Form annehmen.

Beispiele für sinnvolle andere Profile ergeben sich durch die Zugfeder, die jeweils zwei benachbarte Stangen verbindet und mit hohen seitlichen Kräften auf die Stange einwirkt, so dass sie Biegemomente ausgesetzt wird. Es ist sinnvoll, die Stange dagegen zu verstärken, indem ihr z.B. das Profil eines Rechtecks, eines länglichen Polygons, eines Ovals oder einer Ellipse gegeben wird. Die Längsachse dieses Profils sollte dann in Richtung der Zugfeder weisen.

Eine sinnvolle Variante ist es, dass die Öffnungsfläche des Hohlkugelsegmentes eine Ebene ist, die parallel zur Längstrageachse verläuft. Dann verhält sich die Einleitung der Zugkräfte auf das Hohlkugelsegment ebenso wie die Einleitung der Druckkräfte.

Das Hohlkugelsegment umfasst bevorzugter Weise den Kugelsegmentkopf - bezogen auf den Mittelpunkt - mit einem Winkel von 180°. In diesem Fall sind die seitlich auftretenden Kräfte am geringsten und damit auch die Biegebelastung der Stangen minimiert.

Es ist jedoch in einer anderen Variante auch möglich, dass der Umfassungswinkel kleiner als 180° ist. Ein Vorteil dieser Konfiguration ist, dass der Verschwenkungswinkel des Kugelgelenkes steigt. Ein weiterer Vorteil ist die Funktion als eine Überlastsicherung: Ab einer durch die Kraft der dauerhaft elastischen Elemente zum Zusammenhalten zweier benachbarter Kugelgelenke vorgegebenen Kraftgrenze springen die Hohlkugelsegmente von den Kugelsegmentköpfen herunter. Dadurch werden die Arme und Getriebe im Antrieb wirksam vor Beschädigungen geschützt. Hinzunehmen ist dann, dass die seitlich wirkenden Kraftkomponenten größer werden.

In einer anderen Variante weist das Hohlkugelsegment zwei Öffnungen auf, die einander gegenüberliegen, sodass der Kugelsegmentkopf nur mehr ringförmig umfasst wird. Der Vorteil dieser Konfiguration ist, dass der resultierende Kraftangriffspunkt sich auch bei impulsartig ansteigenden Belastungen nur wenig verschiebt und daher eine noch größere Ausnutzung der maximalen Tragfähigkeit der Stange zulässt. Diese Konfiguration könnte also insbesondere für Deltaroboter mit sehr hoher kurzzeitiger Überlastbarkeit sinnvoll sein.

Ein weiterer Vorteil ist, dass die nötige Kraft des dauerhaft elastischen Elementes vermindert wird. Durch die beidseitigen Kugelgelenke an den Armen können nur Kräfte in Armrichtung und entgegen der Federkraft übertragen werden. Kräfte gegen die Federn entstehen durch die Massenträgheiten bei Beschleunigungsvorgängen und durch die an der Wand des Hohlkugelsegmentes auftretenden Normalkräfte. Durch die ringförmige Aussparung wird derjenige Bereich der Oberfläche entfernt, der die größten Querkräfte erzeugen würde

Es hat sich seit Längerem bei Deltarobotern bewährt, die Innenfläche des Hohlkugelsegmentes und/oder die Oberfläche des zugehörigen Kugelsegmentkopfes mit einer Schicht aus elastischem und sehr gleitfähigem Kunststoff zu versehen. In einer effizienten Ausführungsvariante wird ein hohlkugelförmiger Kunststoffeinsatz im Hohlkugelsegment befestigt.

Das eingangs erwähnte Beispiel aus dem Stand der Technik weist ein Hohlkugelsegment an den Enden der Stange auf. In diesem Fall ist an den Armen und an der Parallelplatte jeweils ein komplementärer Kugelsegmentkopf angebracht.

Das Beispiel des Oberschenkelknochens zeigt, dass auch eine inverse Kombination möglich ist, also die Kugelköpfe an die Stangen angeformt sind und in den Armen und in der Parallelplatte komplementäre Hohlkugelsegmente ausgeformt sind.

Im Gegensatz zu der erwähnten Knochenartigen Form mit einem ungleichmäßigen Profil über die Länge der Stange, die gegossen oder spanabhebend aus dem Vollen geformt werden muss, werden in der Praxis die Stangen der Deltaroboter meist ein über die Länge hinweg gleiches Profil aufweisen, weil diese Profile durch Extrudieren oder das Falten oder Aufrollen von Blechen einfach hergestellt werden können. Deshalb ist eine fertigungstechnisch wie statisch sinnvolle Form einer Stange ein Rohr.

Unabhängig von der Form sind die verschiedensten Materialien für die Stangen verwendbar. Seit langem bekannt sind glasfaserverstärkte Kunststoffe (GFK). Nach heutigem Stand der Technik sind Kohlefaserverstärkte Kunststoffe (CFK) am weitesten verbreitet. Prinzipiell sind auch andere Beimischungen in Kunststoffe oder andere Kunststoffe denkbar. Als Material für die Stangen wurden verformtes Blech oder Metallschaum, wie z. B. aufgeschäumtes Aluminium, bereits erwähnt.

Als Variante ist es denkbar, dass der Metallschaum in einer Form aufgeschäumt wird, die nicht nur die Oberfläche der Stange sondern auch den damit verbundenen Kugelkopf enthält. Dann ist die äußere Haut des aufgeschäumten, einstückigen Teils homogen und daher härter und belastbarer als das Innere, das durch zahlreiche Hohlräume erleichtert wird , ohne allzu sehr an Tragfähigkeit einzubüßen.

Die Einschränkung dieser Herstellungsmethode ist der Aufwand für die Herstellung der Form und das Gießen, sodass diese Variante vor allem für höhere Stückzahlen interessant ist.

Einen sehr viel geringeren Aufwand für die Herstellung der einzelnen Stange erfordern Metallrohre, da sie in den verschiedensten Abmessungen, Wandstärken und Materialien verfügbar sind. Daher ist die Herstellung der Unterarme aus Metallrohr auch für sehr kleine Stückzahlen vergleichsweise sehr kostengünstig.

Ein prinzipieller Nachteil von Metallrohren im Vergleich zu Rohren aus CFK mit gleicher Tragfähigkeit ist das höhere Gewicht der Metallrohre. Das Gewicht geht mit der vierten Potenz des effektiven Schwenkradius in das Massenträgheitsmoment und damit in die erreichbare Dynamik des Roboters ein.

Im Vergleich mit bisherigen Anordnungen kann das Metallrohr jedoch durch die erfindungsgemäße Anordnung des Kugelsegmentes in Bezug auf die Längstrageachse des Rohres um so viel leichter gemacht werden, dass dieser Nachteil gegenüber CFK kompensiert wird. Bei gleicher Dynamik kann der Delta-Roboter trotz einer dünneren Wandstärke seiner Unterarme die gleiche maximale Nutzlast tragen.

Im Prinzip ist es nicht ausgeschlossen, dass als Material für die Stangen auch Bambusrohr, Holz und/oder ein anderes Naturmaterial verwendet wird. Denkbare Anwendungsmöglichkeiten sind z. B. Holzverarbeitungsmaschinen. Auch in diesen Fällen sorgt eine erfindungsgemäße Anordnung des Kugelgelenkes gegenüber der Längstrageachse für eine gleichmäßige Belastung der Stäbe und damit für eine bessere Ausnutzung ihrer maximalen Tragfähigkeit.

Als weitere Variante im Sinne der Aufgabenstellung, die Biegebelastung der Stäbe weiter zu verringern, ist es sinnvoll, ein Hohlkugelsegment mit 180° Umschließung des Kugelsegmentkopfes noch durch einen Hohlzylinder mit gleichem Innenradius zu verlängern. Zwar schränkt dieser Hohlzylinder den maximal möglichen Schwenkwinkel des Kugelgelenkes etwas ein, vermeidet aber ein "seitliches Abgleiten" der beiden gegeneinander verspannen Stangen. Dadurch wird die Biegebelastung des Stabes weiter verringert. Die Federn, die die beiden jeweils parallel führenden Stangen miteinander verspannen, sind eine Quelle von Biegemomenten, die auf die Stäbe einwirken. Nach bisherigem Stand der Technik ist in der Nähe eines jeden Kugelgelenkes jeweils nur eine Feder angeordnet. Alternativ wird vorgeschlagen, die Stange über das Kugelgelenk hinaus zu verlängern und auch auf der anderen Seite des Kugelgelenkes noch eine Zugfeder anzuordnen. Wenn diese beiden Zugfedern etwa gleiche Charakteristik haben, entstehen dadurch keine Biegemomente mehr, die sich in die Stange hinein übertragen und zu einem Abknicken der Stange in ihrer Mitte zwischen den beiden Kugelgelenken beitragen können.

Im Folgenden sollen weitere Einzelheiten und Merkmale der Erfindung anhand eines Beispiels näher erläutert werden. Dieses soll die Erfindung jedoch nicht einschränken, sondern nur erläutern. Es zeigt in schematischer Darstellung:
- Figur 1: Perspektivische Darstellung eines Deltaroboters
- Figur 2: Schnitt durch ein Kugelgelenk

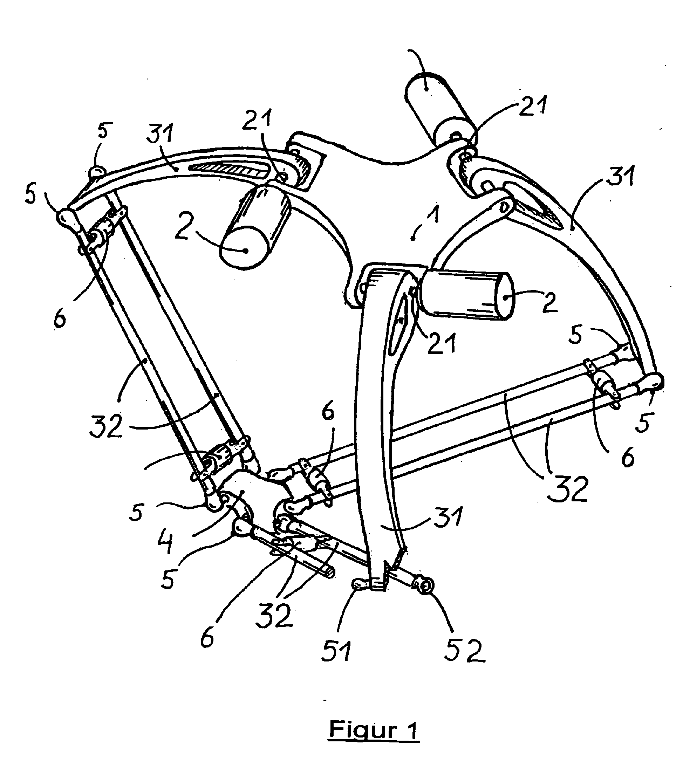

In Figur 1 ist das prinzipielle Schema eines erfindungsgemäßen Deltaroboters mit zugfederstabilisierten Stangen 32 gezeichnet. Am oberen Rand der Zeichnung ist die Grundplatte 1 mit ihren drei, etwa gabelförmigen Aufnahmen für die Arme 31 und die Servoantriebe 2 zu sehen, die über ihre Abtriebswelle 21 die Arme 31 wie eine Kurbel bewegen. Mit den Enden jedes Armes 31 ist über Kugelgelenke 5 jeweils ein Paar der Stangen 32 verbunden. Ebenfalls über Kugelgelenke 5 sind diese Paare von Stangen 32 wiederum mit der Parallelplatte 4 verbunden.

Deshalb bleibt die Parallelplatte 4 stets parallel zur ortsfesten Grundplatte 1, unabhängig davon, in welche Positionen des erreichbaren Verschwenkraumes vom Deltaroboter sie bewegt wird.

An der Parallelplatte 4 kann ein Warenaufnehmer, ein Werkzeug, ein Sensor, wie z.B. eine Kamera, oder ein anderes Objekt befestigt werden, das die eigentliche Aktivität des Deltaroboter bestimmt und von ihm in die jeweils gewünschte Position bewegt wird.

In Figur 1 ist eingezeichnet, wie jedes Paar der Stangen 32 am oberen sowie am unteren Ende durch ein dauerhaft elastisches Element 6 zusammengehalten wird. Nur bei dem in Figur 1 nach vorne weisenden Arm 31 ist die Verbindung zu den eigentlich daran angebundenen Stangen 32 zeichnerisch aufgebrochen. Dadurch wird auf der rechten Seite das Hohlkugelsegment 52 sichtbar, das in dieser Perspektive einen Blick in seine halbkugelförmige Vertiefung ermöglicht. Diese Kalottenartige Vertiefung ist komplementär zu dem Kugelsegmentkopf 51 geformt. Ein solcher ist an der linken Seite des vorne gezeichneten Armes 31 sichtbar, weil die eigentlich daran angebundene Stange 32 zeichnerisch abgeschnitten ist.

Der Übersichtlichkeit halber ist in Figur 1 das dauerhaft elastische Element 6 an den oberen Enden der beiden nach vorne weisenden Stangen 32 weggelassen.
In Figur 1 ist nachvollziehbar, dass die Zugfedern 6 jeweils ein Paar der Stangen 32 mit den daran befestigten Hohlkugelsegmente 52 auf die Kugelsegmentköpfe 51 drücken und auf diese Weise die Funktion der Kugelgelenke 5 sicherstellen. Ebenso ist nachvollziehbar, dass bei einer relativ hohen Zugkraft der Zugfedern 6 die Hohlkugelsegmente 51 stets vollflächig auf dem zugehörigen Kugelsegmentkopf 51 aufliegen.

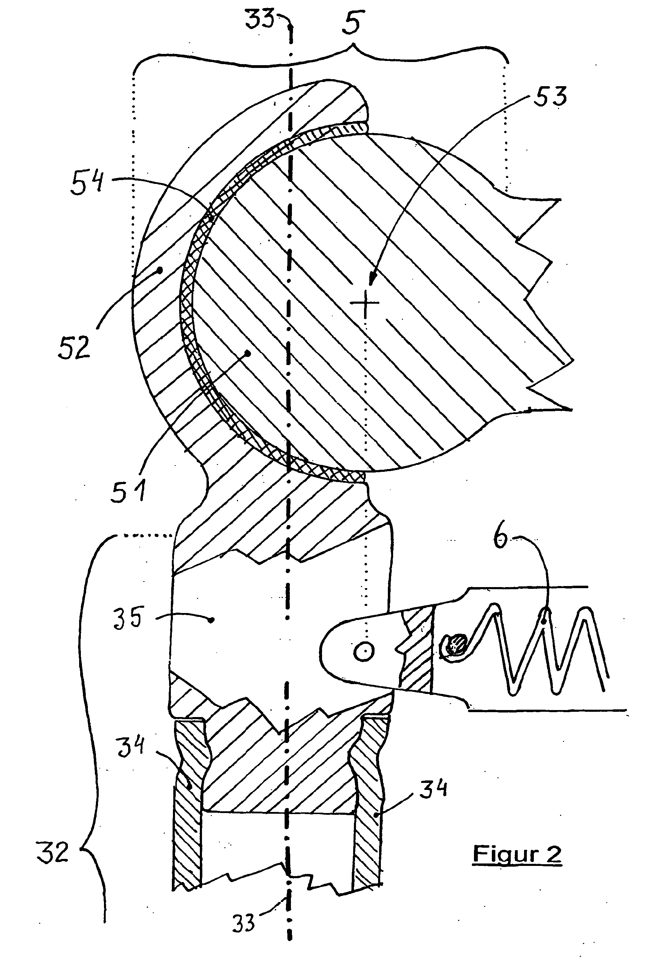

In Figur 2 ist ein Schnitt durch ein Kugelgelenk 5 wiedergegeben. Den Kugelsegmentkopf 51 umschließt das Hohlkugelsegment 52 mit einem Umfassungswinkel von ca. 180°, wobei eine Kunststoffschicht 54 beide Elemente voneinander trennt und die Haft- und Gleitreibungskoeffizienten zwischen Hohlkugel und Kugelsegment erheblich verbessert.

Der Kugelsegmentkopf 51 ist an einem - hier nicht gezeichneten - Arm 31 oder an der - hier ebenfalls nicht gezeichneten - Parallelplatte 4 befestigt.

Das Hohlkugelsegment 52 geht in die Stange 32 über. Diese besteht im hier dargestellten Ausführungsbeispiel aus einem massiven Ansatzstück 54 und einem darauf aufgesteckten Hohlzylinder 34, wie z.B. einem Blechrohr. Im Schnitt der Figur 1 ist zu sehen, dass das Blechrohr 34 von beiden Seiten her in Kerben des Ansatzstückes 35 eingedrückt ist und dadurch gegen Zug-, Druck- und Biegekräfte gesichert ist. Diese Verbindung kann z. B. durch magnetisches Impulsformen hergestellt werden.

Im Ausführungsbeispiel der Figur 2 greift auf dem Ansatzstück 35 der Stange 32 ein dauerhaft elastisches Element 6 an. In Figur 2 ist gut nachvollziehbar, dass die seitlich wirkende Kraft des dauerhaft elastischen Elementes 6 das Hohlkugelsegment 52 vollflächig gegen den Kugelsegmentkopf 51 presst, sofern das hier als abgebrochen dargestellte Ende der Stange 32 als seitlich unverschiebbar zu werten ist, was dadurch gewährleistet ist, dass die Stange 32 an ihrem anderen Ende ebenfalls ein Hohlkugelsegment 52 trägt, das - wie in Figur 2 - auf einen komplementären Kugelsegmentkopf 51 gepresst wird.

Figur 2 zeigt schon auf den ersten Blick, dass die Verschwenkachse zur Befestigung des dauerhaft elastischen Elementes 6 - z.B. einer Zugfeder - keines falls in der Längstrageachse 33 angeordnet ist, sondern auf einer Linie, die die Mittelpunkte 53 der beiden Kugelsegmentköpfe 51 verbindet. Bei dieser Anordnung ihrer Verschwenkachsen behält die Feder 6 unabhängig von der Winkelstellung der beiden Stangen 32 stets ihre Länge bei, was ihre Lebensdauer erhöht.

In Figur 2 ist ein wesentliches Merkmal der Erfindung sehr gut zu erkennen, nämlich der Abstand zwischen der Mitte 53 des Kugelsegmentkopfes 51 und der Längstrageachse 33 der Stange 32.

Bei einem Rohr ist bekanntlich die Längstrageachse 33 identisch mit dessen Mittelachse. Diese Achse ist in Figur 2 durch eine Strich-Punkt-Strich-Linie gekennzeichnet.

Nach häufigem, bisherigem Stand der Technik würde diese Längstrageachse 33 durch die Mitte 53 des Kugelsegmentkopfes 51 verlaufen. Bei der Erfindung ist die Längstrageachse 33 jedoch in das Hohlkugelsegment 52 hinein verschoben.

In Figur 2 ist gut nachvollziehbar, dass die Längstrageachse 33 damit zumindest sehr nahe an die Linie kommt, auf der der resultierende Kraftvektor aller Kraftkomponenten verläuft, die in vertikaler Richtung auf die Innenfläche des Hohlkugelsegmentes 52 auftreffen.

In Figur 2 kann nachvollzogen werden, dass eine Zugkraft, die über die Stange 32 auf das Hohlkugelsegment 52 wirkt, sich gleichmäßig auf dessen Innenseite verteilt und dadurch einen resultierenden Kraftvektor erzeugt, der außerhalb des Mittelpunktes 53 vom Kugelsegmentkopf 51 verläuft:
Unterhalb des Mittelpunktes 53 ist die in Richtung der Tragelinie 33 wirkende Kraftkomponente am größten; auf gleicher Höhe" wie der Mittelpunkt 53, also in der Mitte der Innenfläche des Hohlkugelsegmentes 52 ist die Kraftkomponente in Richtung der Längstrageachse 33 Null.

Wenn alle zur Längstrageachse 33 parallelen Kraftkomponenten auf eine senkrecht zur Längstrageachse 33 verlaufende Linie projiziert werden, so zeigt sich, dass sie vom Betrag Null in der Mitte der Innenseite des Hohlkugelsegmentes sehr stark ansteigen, auf "halbem Weg" zum Mittelpunkt schon weit mehr als 50% erreicht haben und bei Erreichen des Mittelpunktes 53 auf 100 % angestiegen sind. Der Ort des Flächenschwerpunktes der Fläche unter dieser Kurve ist der optimale Abstand für die Längstrageachse 33 vom Mittelpunkt 53. In diesem Punkt wird nämlich - gemäß der Aufgabenstellung der Erfindung - die Zugkraft ganz gleichmäßig auf die Stange 32 verteilt, sodass sie mit der größtmöglichen Zug- oder Druckkraft belastet werden kann.

### Bezugszeichenliste

- 1: Grundplatte
- 2: Antriebe, wenigstens drei Stück auf Grundplatte 1
- 21: Abtriebswelle eines Antriebs 2
- 31: Arm, über Abtriebswelle 21 oder anders mit Antrieb 2 verbunden
- 32: Stange, verbindet Arm 31 jeweils gelenkig mit Parallelplatte 4
- 33: Längstrageachse, verbindet die Flächenschwerpunkte aller Querschnitte entlang der Längsachse der Stangen 32
- 34: Hohlzylinder, Teil der Stange 32
- 35: Ansatzstück der Stange 32
- 4: Parallelplatte, an Stangen 32
- 5: Kugelgelenk an den Stangen 32
- 51: Kugelsegmentkopf, Teil des Kugelgelenks 5
- 52: Hohlkugelsegment, komplementär zum Kugelsegmentkopf 51
- 53: rotatorische Mitte eines Kugelgelenkes 5
- 54: Kunststoffschicht, zwischen Kugelsegmentkopf 51 und Hohlkugelsegment 52
- 6: dauerhaft elastisches Element, zwischen zwei Stangen 32 gespannt

## Patentansprüche

1. Deltaroboter bestehend aus
- einer ortsfesten Grundplatte (1) und
- wenigstens drei darauf befestigten Antrieben (2), die mit
- wenigstens je einem Arm (31) verbunden sind, von denen wenigstens einer an seinem anderen Ende über je ein Kugelgelenk (5) mit
- jeweils zwei Stangen (32) verbunden ist, die parallel zueinander verlaufen und die an ihrem anderen Ende jeweils über ein weiteres Kugelgelenk (5) mit
- einer bewegbaren Parallelplatte (4) verbunden sind, wobei jedes Kugelgelenk (5) aus je einem Kugelsegmentkopf (51) und einem dazu komplementären Hohlkugelsegment (52) besteht und die beiden an parallelen Stangen (32) jeweils benachbarten Kugelgelenke (5) spiegelsymmetrisch zueinander ausgerichtet sind und jedes Hohlkugelsegment (52) auf den zugehörigen Kugelsegmentkopf (51) aufgedrückt wird, indem wenigstens ein dauerhaft elastisches Element (6) zwischen zwei zueinander parallelen Stangen (32) gespannt ist und wobei
der Mittelpunkt (53) wenigstens eines Kugelsegmentkopfes (51) gegenüber der Längstrageachse (33) der mit dem Kugelgelenk (5) verbundenen Stange (32) verschoben angeordnet ist und
- die Richtung der Verschiebung zentral vom Hohlkugelsegment (52) hinweg weist und
- der Betrag der Verschiebung kleiner als der Radius des Kugelsegmentkopfes (51) ist.
**dadurch gekennzeichnet, dass**
die Verschwenkachsen der dauerhaft elastischen Elemente (6)
- außerhalb der Längstrageachse (33) angeordnet sind und
- auf einer geraden Verbindungslinie zwischen den rotatorischen Mitten (53) der beiden Kugelgelenke (5) an den beiden Enden der jeweiligen Stange (32) angeordnet sind und
- jeweils den gleichen Abstand zu den Ihnen benachbarten Kugelsegmentköpfer (51) haben.

2. Deltaroboter nach Anspruch 1, **dadurch gekennzeichnet, dass** das dauerhaft elastische Element (6) eine Feder oder ein Gummiband oder ein Kunststoffband ist.

3. Deltaroboter nach einem der vorhergehenden Ansprüche, **dadurch gekennzeichnet, dass** der Antrieb (2) ein rotierender Servomotor oder ein Linearmotor oder ein Schrittmotor oder ein anderer elektrischer Antrieb oder ein Hydraulikzylinder oder ein Pneumatikzylinder oder ein Piezokristall ist.

4. Deltaroboter nach einem der vorhergehenden Ansprüche, **dadurch gekennzeichnet, dass** sich der Querschnitt der Stange (32) über ihre Länge hinweg ändert und die Längstrageachse (33) die Flächenschwerpunkte aller Querschnitte der Stange (32) miteinander verbindet.

5. Deltaroboter nach einem der vorhergehenden Ansprüche, **dadurch gekennzeichnet, dass** der Betrag der Verschiebung größer als ein Viertel und kleiner als drei Viertel des Radius des Kugelsegmentkopfes (51) ist.

6. Deltaroboter nach einem der vorhergehenden Ansprüche, **dadurch gekennzeichnet, dass** der Betrag der Verschiebung dem Abstand zwischen dem Mittelpunkt (53) und dem Flächenschwerpunkt der Fläche unter der Kurve der in Richtung der Längstrageachse (33)verlaufenden Zug- und Druckkraftkomponenten in Abhängigkeit des senkrecht zur Längstrageachse (33) verlaufenden Radius entspricht.

7. Deltaroboter nach einem der vorhergehenden Ansprüche, **dadurch gekennzeichnet, dass** die Öffnungsfläche des Hohlkugelsegmentes (52) eine Ebene ist, die parallel zur Längstrageachse (33) verläuft.

8. Deltaroboter nach einem der vorhergehenden Ansprüche, **dadurch gekennzeichnet, dass** das Hohlkugelsegment (52) den Kugelsegmentkopf (51) bezogen auf den Mittelpunkt (53) mit einem Winkel von 180° umfasst.

9. Deltaroboter nach Anspruch 6, **dadurch gekennzeichnet, dass** der Umfassungswinkel kleiner als 180° ist.

10. Deltaroboter nach einem der vorhergehenden Ansprüche, **dadurch gekennzeichnet, dass** das Hohlkugelsegment (52) zwei Öffnungen aufweist und den Kugelsegmentkopf (51) etwa ringförmig umfasst.

11. Deltaroboter nach einem der vorhergehenden Ansprüche, **dadurch gekennzeichnet, dass** die Innenfläche eines Hohlkugelsegmentes (52) und/oder der zugehörige Kugelsegmentkopf (51) mit einer elastischen und sehr gleitfähigen Kunststoffschicht (54) eingebracht ist.

12. Deltaroboter nach einem der vorhergehenden Ansprüche, **dadurch gekennzeichnet, dass** die Kunststoffschicht (54) als Kunststoffeinsatz in das Hohlkugelsegment (52) montiert wird.

13. Deltaroboter nach einem der vorhergehenden Ansprüche, **dadurch gekennzeichnet, dass** an einem Ende wenigstens einer Stange (32) ein Hohlkugelsegment (52) angeordnet ist.

14. Deltaroboter nach einem der vorhergehenden Ansprüche, **dadurch gekennzeichnet, dass** an einem Ende wenigstens einer Stange (32) ein Kugelsegmentkopf (51) angeordnet ist.

15. Deltaroboter nach einem der vorhergehenden Ansprüche, **dadurch gekennzeichnet, dass** die Stangen (32) über ihre gesamte Länge hinweg im Querschnitt das gleiche Profil aufweisen.

16. Deltaroboter nach Anspruch 12,
**dadurch gekennzeichnet, dass**
wenigstens eine Stange (32)zum größten Teil aus einem Hohlzylinder (34) besteht.

17. Deltaroboter nach Anspruch 12,
**dadurch gekennzeichnet, dass** das Profil
- ein Rechteck oder
- ein Oval oder
- eine Ellipse
ist, dessen, bzw. deren Längsachse in Richtung des dauerhaft elastischen Elementes (6) ausgerichtet ist.

18. Deltaroboter nach einem der vorhergehenden Ansprüche, **dadurch gekennzeichnet, dass** wenigstens eine Stange (32) aus
- Glasfaserverstärktem Kunststoff (GFK) und/oder
- Kohlefaserverstärktem Kunststoff (CFK) und/oder
- Kunststoff mit anderen Beimischungen und/oder
- einem anderen Kunststoff und/oder
- Blech und/oder
- Metallschaum und/oder
- Metall in einer anderen Form und/oder
- Bambusrohr und/oder
- Holz und/oder
- einem anderen Naturmaterial
besteht.

19. Deltaroboter nach Anspruch 16, **dadurch gekennzeichnet, dass** zumindest die Außenfläche der Stange (32) aus korrosionsbeständigem Edelstahl oder einem anderen, gegen aggressive Reinigungsmittel und andere aggressive Medien beständigen Material besteht.

20. Deltaroboter nach Anspruch 6, **dadurch gekennzeichnet, dass** das Hohlkugelsegment (52) durch einen Hohlzylinder mit gleichem Innenradius verlängert ist.

21. Deltaroboter nach einem der vorhergehenden Ansprüche, **dadurch gekennzeichnet, dass** wenigsten ein Paar benachbarter Stangen (32) über die beiden Kugelgelenke (5) hinaus verlängert ist und an dieser Verlängerung ein zweites dauerhaft elastisches Element (6) beide Stangen (32) miteinander verbindet und die Zugkraft dieses zweiten, dauerhaft elastischen Elementes (6) in etwa der Zugkraft des ersten dauerhaft elastischen Elementes (6) entspricht.

## Claims

1. Delta robot, consisting of
- a stationary base plate (1) and
- at least three drives (2) fastened thereon, which
- are connected to at least one arm (31) in each case, of which at least one is connected at the other end thereof by way of a ball joint (5) in each case to
- two rods (32) in each case, said rods running parallel to each other and at the other end thereof being connected by way of a further ball joint (5) to
- a movable parallel plate (4)
each ball joint (5) being comprised of a ball segment head (51) and a hollow ball segment (52) designed complementary thereto, and the two ball joints (5) adjacent to one another on parallel rods (32) being oriented mirror-symmetrically to each other, and each hollow ball segment (52) being pressed onto the associated ball segment head (51) in that at least one permanently elastic element (6) is tensioned between two rods (32), which are oriented parallel to one another, and the centre point (53) of at least one ball segment head (51) being displaced with respect to the longitudinal support axis (33) of the rod (32), which is connected to the ball joint (5), and
- the direction of displacement pointing centrally away from the hollow ball segment (52) and
- the amount of the displacement being always smaller than the radius of the spherical segment head (51),
**characterised in that**
the pivot axes of the permanently elastic elements (6)
- are disposed outside the longitudinal support axis (33) and
- are disposed on a straight connecting line between the centers of rotation (53) of the two ball joints (5) at the two ends of the respective rod (32) and
- have the same distance in each case from the ball segment heads (51) that are adacent thereto.

2. Delta robot according to claim 1, **characterised in that** the permanently elastic element (6) is a spring or a rubber band or a plastic band.

3. Delta robot according to one of the preceding claims, **characterised in that** the drive (2) is a rotating servo motor or a linear motor or a stepping motor or another electrical drive or a hydraulic cylinder or a pneumatic cylinder or a piezo crystal.

4. Delta robot according to one of the preceding claims, **characterised in that** the cross-section of the rod (32) changes along its length and the longitudinal support axis (33) connects the centroids of all cross-sections of the rod (32) to one another.

5. Delta robot according to one of the preceding claims, **characterised in that** the amount of the displacement is greater than a quarter and less than three quarters of the radius of the ball segment head (51).

6. Delta robot according to one of the preceding claims, **characterised in that** the amount of the displacement corresponds to the distance between the centre point (53) and the centroid of the area below the curve of the tensile and compressive force components running in the direction of the longitudinal support axis (33) as a function of the radius extending perpendicular to the longitudinal support axis (33).

7. Delta robot according to one of the preceding claims, **characterised in that** the opening area of the hollow ball segment (52) is a plane that extends parallel to the longitudinal support axis (33).

8. Delta robot according to one of the preceding claims, **characterised in that** the hollow ball segment (52) encircles the ball segment head (51) with an angle of 180° with respect to the centre point (53).

9. Delta robot according to claim 6, **characterised in that** the encircling angle is less than 180°.

10. Delta robot according to one of the preceding claims, **characterised in that** the hollow ball segment (52) comprises two openings and encircles the ball segment head (51) approximately annularly.

11. Delta robot according to one of the preceding claims, **characterised in that** the inner surface of a hollow ball segment (52) and/or of the associated ball segment head (51) is introduced with an elastic and very lubricious plastic layer (54).

12. Delta robot according to one of the preceding claims, **characterised in that** the plastic layer (54) is mounted in the hollow ball segment (52) as a plastic insert.

13. Delta robot according to one of the preceding claims, **characterised in that** a hollow ball segment (52) is disposed at one end of at least one rod (32).

14. Delta robot according to one of the preceding claims, **characterised in that** a ball segment head (51) is disposed at one end of at least one rod (32).

15. Delta robot according to one of the preceding claims, **characterised in that** the rods (32) have the same cross-sectional profile along their entire length.

16. Delta robot according to claim 12, **characterised in**
**that**
at least one rod (32) consists for the most part of a hollow cylinder (34).

17. Delta robot according to claim 12, **characterised in that** the
profile is
- a rectangle or
- an oval or
- an ellipse
the longitudinal axis of which is oriented in the direction of the permanently elastic element (6).

18. Delta robot according to one of the preceding claims, **characterised in that** at least one rod (32) is made of
- glass fibre-reinforced plastic (GRP) and/or
- carbon fibre-reinforced plastic (CRP) and/or
- plastic with other admixtures and/or
- another plastic and/or
- sheet metal and/or
- metal foam and/or
- metal in another form and/or
- bamboo tube and/or
- wood and/or
- another natural material.

19. Delta robot according to claim 15, **characterised in that** at least the outer surface of the rod (32) consists of corrosion-resistant stainless steel or another material that is resistant to aggressive detergents and other aggressive media.

20. Delta robot according to claim 6, **characterised in that** the hollow ball segment (52) is extended by a hollow cylinder with the same internal radius.

21. Delta robot according to one of the preceding claims,
**characterised in that** at least one pair of adjacent rods (32) is extended beyond the two ball joints (5) and, on this extension, a second permanently elastic element (6) connects both rods (32) together, and the tensile force of this second permanently elastic element (6) corresponds approximately to the tensile force of the first permanently elastic element (6).

## Revendications

1. Robot delta consistant en
■ une plaque de base inamovible (1) et
■ au moins trois entraînements (2) fixés dessus, qui
■ sont chacun relié par au moins un bras (31), dont au moins un est relié à son autre extrémité, par l'intermédiaire d'une rotule (5), avec
■ à chaque fois à deux tiges (32) qui suivent des tracés parallèles et qui, à leur autre extrémité, sont à chaque fois reliées, au moyen d'une autre rotule (5), à
■ une plaque parallèle mobile (4) sachant que chaque rotule (5) consiste chacune en une tête de segment sphérique (51) et un segment sphérique creux (52) qui lui est complémentaire, les deux rotules (5) à chaque fois voisines étant orientées symétriquement en miroir sur des tiges parallèles, chaque segment sphérique creux (52) étant pressé sur la tête de segment sphérique correspondante en tendant au moins un élément durablement élastique (6) entre deux tiges parallèles l'une à l'autre (32), sachant que le point moyen (53) d'au moins une tête de segment sphérique (51) est disposé de façon décalée par rapport à l'axe porteur longitudinal (33) de la tige (32) reliée avec la rotule (5),
■ ce décalage étant orienté de façon centrale au-delà du segment sphérique creux (52),
■ le montant du décalage étant inférieur au rayon de la tête du segment sphérique (51)
**caractérisé par le fait**
**que** les axes de pivotement des éléments durablement élastiques (6),
■ sont disposés en dehors de l'axe porteur longitudinal (33) et
■ sont disposés, sur une ligne de liaison rectiligne entre les milieux rotatifs (53) des deux rotules (5), sur les deux extrémités de la tige respective (32),
■ en ayant à chaque fois la même distance par rapport aux têtes de segment sphérique (51) voisines.

2. Robot delta selon la revendication 1, **caractérisé par le fait que** l'élément durablement élastique (6) est un ressort ou une bande en caoutchouc ou une bande en plastique.

3. Robot delta selon une des revendications précédentes, **caractérisé par le fait que** l'entraînement (2) est un servomoteur rotatif ou un moteur linéaire ou un moteur pas à pas ou un autre entraînement électrique ou un vérin hydraulique ou un vérin pneumatique ou un cristal piézo.

4. Robot delta selon une des revendications précédentes, **caractérisé par le fait que** la section de la tige (32) change sur la longueur et que l'axe porteur longitudinal (33) relie les centres de gravité de surface de toutes les sections de la tige (32) les unes aux autres.

5. Robot delta selon une des revendications précédentes, **caractérisé par le fait que** le montant du décalage est supérieur à un quart et est inférieur aux trois quarts du rayon de la tête du segment sphérique (51).

6. Robot delta selon une des revendications précédentes, **caractérisé par le fait que** le montant du décalage correspond à la distance entre le point central (53) et le centre de gravité de la surface en dessous de la courbe des composants de pression et de traction courant dans le sens de l'axe porteur longitudinal (33) en fonction du rayon courant à la verticale de l'axe porteur longitudinal (33).

7. Robot delta selon une des revendications précédentes, **caractérisé par le fait que** la surface d'ouverture du segment sphérique creux (52) est un niveau qui suit un tracé parallèle à l'axe porteur longitudinal (33).

8. Robot delta selon une des revendications précédentes, **caractérisé par le fait que** le segment sphérique creux (52) englobe la tête du segment sphérique (51) rapportée au point central (53) avec un angle de 180°.

9. Robot delta selon la revendication 6, **caractérisé par le fait que** l'angle d'enveloppement est inférieur à 180°.

10. Robot delta selon une des revendications précédentes, **caractérisé par le fait que** le segment sphérique creux (52) présente deux ouvertures et englobe la tête du segment sphérique (51) en prenant à peu près la forme d'un anneau.

11. Robot delta selon une des revendications précédentes, **caractérisé par le fait que** la surface intérieure d'un segment sphérique creux (52) et/ou la tête de segment sphérique (51) correspondante est pourvue d'une couche en plastique (54) élastique et très coulissante.

12. Robot delta selon une des revendications précédentes, **caractérisé par le fait que** la couche en plastique (54) est montée en tant qu'insert en plastique dans le segment sphérique creux (52).

13. Robot delta selon une des revendications précédentes, **caractérisé par le fait qu'**à l'extrémité d'au moins une tige (32) est disposé un segment sphérique creux (53).

14. Robot delta selon une des revendications précédentes, **caractérisé par le fait qu'**à l'extrémité d'au moins une tige (32) est disposée une tête de segment sphérique (53).

15. Robot delta selon une des revendications précédentes, **caractérisé par le fait que** les tiges (32) présentent en moyenne le même profil sur toute leur longueur.

16. Robot delta selon la revendication 12, **caractérisé par le fait qu'**au moins une tige (32) consiste en grande partie en un cylindre creux (34).

17. Robot delta selon la revendication 12, **caractérisé par le fait que** le profil
■ est un carré ou
■ un ovale ou
■ une ellipse
dont l'axe longitudinal est orienté dans le sens de l'élément durablement élastique (6).

18. Robot delta selon une des revendications précédentes, **caractérisé par le fait qu'**au moins une tige (32) consiste
■ en plastique renforcé par de la fibre de verre et/ou
■ en plastique renforcée par de la fibre de carbone et/ou
■ en plastique avec d'autres mélanges et/ou
■ en un autre plastique et/ou
■ en tôle et/ou
■ en mousse métallique et/ou
■ en un métal sous une autre forme et/ou
■ en tube de bambou et/ou
■ en bois et/ou
■ un autre matériau naturel.

19. Robot delta selon la revendication 16, **caractérisé par le fait qu'**au moins la surface extérieure de la tige (32) consiste en inox résistant à la corrosion ou en un autre matériau résistant aux nettoyants agressifs et autres fluides agressifs.

20. Robot delta selon la revendication 6, **caractérisé par le fait que** le segment sphérique creux (52) est prolongé par un cylindre creux ayant le même rayon intérieur.

21. Robot delta selon une des revendications précédentes, **caractérisé par le fait qu'**au moins une paire de tiges voisines (32) est prolongée au-delà des deux rotules (5), un deuxième élément durablement élastique (6) reliant les deux tiges (32) l'une à l'autre sur ce prolongement, la force de traction de ce deuxième élément durablement élastique (6) correspondant à peu près à la force de traction du premier élément durablement élastique (6).
